# EUROPEAN PATENT SPECIFICATION

(11) **EP 4 517 580 B1**
(45) Date of publication and mention of the grant of the patent: **30.09.2026**
(21) Application number: 24750563.9
(22) Date of filing: 31.01.2024
(51) Int. Cl.: G06K 7/10, G06K 7/14, G06K 19/06, H01M 50/598, H01M 50/531, H01M 50/557

(54) **IDENTIFICATION MARK RECOGNITION DEVICE, IDENTIFICATION MARK RECOGNITION METHOD, AND SECONDARY BATTERY MANUFACTURING METHOD**
IDENTIFIKATIONSMARKENERKENNUNGSVORRICHTUNG, IDENTIFIKATIONSMARKENERKENNUNGSVERFAHREN UND SEKUNDÄRBATTERIEHERSTELLUNGSVERFAHREN
DISPOSITIF DE RECONNAISSANCE DE MARQUE D'IDENTIFICATION, PROCÉDÉ DE RECONNAISSANCE DE MARQUE D'IDENTIFICATION ET PROCÉDÉ DE FABRICATION DE BATTERIE SECONDAIRE

(30) Priority: 02.02.2023 KR 20230014401
(43) Date of publication of application: 05.03.2025
(73) Proprietor: LG Energy Solution, Ltd., Seoul 07335 (KR)
(72) Inventor: KIM, Jun Beom, Daejeon 34122 (KR); JUNG, Tae Kwang, Daejeon 34122 (KR); PARK, Kyoung Chan, Daejeon 34122 (KR); BOO, Jang Hun, Daejeon 34122 (KR); SHIN, Nak Cheon, Daejeon 34122 (KR); PARK, Yeong Heon, Daejeon 34122 (KR); PARK, Jong Hyun, Daejeon 34122 (KR); JEONG, Seok Jin, Daejeon 34122 (KR); KIM, Min Su, Daejeon 34122 (KR); PARK, Dong Wook, Daejeon 34122 (KR)
(74) Representative: BCKIP Part mbB
(86) International application number: PCT/KR2024/001477
(87) International publication number: WO 2024/162766

(56) References cited:
- CN-U- 216 750 224
- KR-A- 20220 052 459
- KR-B1- 101 605 229
- KR-B1- 101 774 261
- KR-B1- 102 146 945
- KR-B1- 102 261 757
- KR-B1- 102 286 676

## Description

### [Technical Field]

The present invention relates to an identification mark recognition device and method for identifying an identification mark on an electrode tab. The present invention also relates to a secondary battery manufacturing method using the identification mark recognition device and method.

More specifically, the present invention relates to an identification mark recognition device for aligning an electrode tab with respect to an identification mark reader to improve a recognition rate of the identification mark reader, an identification mark recognition method, and a secondary battery manufacturing method.

### [Background Art]

Recently, chargeable and dischargeable secondary batteries have been widely used as energy sources for wireless mobile devices. In addition, secondary batteries have attracted attention as energy sources of electric vehicles, hybrid electric vehicles, etc., and are suggested as a solution to air pollution due to existing gasoline vehicles and diesel vehicles using fossil fuels.

A secondary battery is manufactured by a number of sub-processes such as a process involving coating a current collector with an active material and rolling the current collector to manufacture positive electrodes and negative electrodes, a notching process involving forming electrode tabs, an electrode assembly manufacturing process for manufacturing an electrode assembly using the manufactured electrodes and separators, a packaging process for accommodating the electrode assembly in a case, and a charging/discharging process for providing characteristics before shipment.

An identification mark may be marked on electrode tabs of the electrodes (the positive and negative electrodes) to check and track an intermediate product during a manufacturing process. When an electrode is put into a predetermined sub-process, the identification mark on the electrode tab may be identified to specify the electrode. In addition, information about the identification mark may be connected with information about the sub-processes to track the sub-process into which the electrode is currently put.

However, the electrode tabs are very thin and thus are likely to be bent or crumpled during the transfer of the electrodes. In particular, when electrodes and a separator are stacked to form an electrode assembly, the lifting or crumpling of electrode tabs may become severe due to various factors, such as when the electrode tabs lean to one side or are pushed out.

As described above, when the electrode tabs on which an identification mark is marked are bent or crumpled, irregular light reflection may occur, thus causing the identification mark to be out of focus on an identification mark reader when the identification mark is identified. In addition, the identification mark may not be located in the field of view of the identification mark reader. In this case, a recognition error of the identification mark may occur, thus making it difficult to track an intermediate product during the manufacturing process.

Therefore, there is a need to develop a technique for aligning electrode tabs to be in the field of view of the dentification mark reader even when the electrode tabs are bent.

CN 113156528 A discloses a tab folding detection device and detection method.

CN 216750224 U discloses a battery cell tab shaping, positioning and code scanning device comprising an electrode pressing unit and an identification mark reader, wherein the pressing device is arranged perpendicular to the battery cell placed on a receiving table.

KR 101605229 B1 discloses a vision apparatus for measuring appearance of battery cell tab comprising a vision camera placed above a tab of the battery cell, and a guide member realized by a wire to prevent the tab from being lifted upwards.

### [Disclosure of the Invention]

### [Technical Problem]

To address the above-described problem, the present invention is directed to providing an identification mark recognition device for increasing a recognition rate of an identification mark reader by pressing electrode tabs to be aligned with respect to the identification mark reader, an identification mark recognition method, and a secondary battery manufacturing method.

### [Technical Solution]

According to one aspect of the present invention, an identification mark recognition device in accordance with claim 1 is provided.

According to the invention, an identification mark recognition device includes: an identification mark reader configured to identify an identification mark on an electrode tab of a unit cell or an electrode assembly; an electrode tab pressing unit configured to press the electrode tab to cause a surface of the electrode tab on which the identification mark is marked to be aligned with respect to the identification mark reader; and a controller configured to control the electrode tab pressing unit and the identification mark reader to allow the identification mark reader to identify the identification mark after the pressing of the electrode tab by the electrode tab pressing unit, in which the electrode tab pressing unit is arranged to be inclined at a predetermined angle with respect to the unit cell or the electrode assembly.

The identification mark reader may be arranged over the unit cell or the electrode assembly at the same angle as the angle at which the electrode tab pressing unit is arranged to be on the same axis as the electrode tab pressing unit, the electrode tab pressing unit may be coupled to the identification mark reader and configured to be movable from the identification mark reader, and the electrode tab pressing unit is configured to press the surface of the electrode tab on which the identification mark is marked, as the electrode tab pressing unit is moved toward the electrode tab from the identification mark reader.

An end of the electrode tab pressing unit in a direction of pressing by the electrode tab pressing unit may be provided with a plurality of pressing strings configured to press the electrode tab.

Outer surfaces of the plurality of pressing strings may be coated with fluorinated ethylene propylene (FEP) or poly tetrafluoro ethylene (PTFE).

The plurality of pressing strings may be arranged to be parallel to a direction in which the electrode tab extends from a body part of the unit cell or a body part of the electrode assembly.

The plurality of pressing strings may be arranged to press surfaces of the electrode tab that are spaced a predetermined distance from both sides of the identification mark.

The electrode tab pressing unit according to the invention includes a main body frame with a through-hole. The electrode tab pressing unit may further include a plurality of string brackets installed on the main body frame that protrude from the main body frame in the direction of pressing by the electrode tab pressing unit, the plurality of string brackets may be arranged to face each other with the through-hole interposed therebetween, and both ends of the plurality of pressing strings may be fixed on the plurality of string brackets facing each other.

The plurality of pressing strings may be coupled to the plurality of string brackets to cover ends of the plurality of string brackets facing each other, and the end of each of the plurality of string brackets facing each other may be provided with a chamfer surface inclined toward the other string bracket.

According to the invention, the identification mark reader is slantingly arranged over the unit cell or the electrode assembly to be on the same axis as the through-hole.

The identification mark may be bar-code or quick response (QR) code.

The identification mark recognition device may further include a lighting member between the identification mark reader and the electrode tab, and the lighting member may be on the same axis as the identification mark reader.

The identification mark recognition device may further include an air injector configured to inject air toward the electrode tab before the electrode tab is pressed by the electrode tab pressing unit.

According to another aspect of the present invention, an identification mark recognition method in accordance with claim 11 is provided.

According to the invention, the identification mark recognition method includes: placing a unit cell or an electrode assembly, which includes an electrode tab on which an identification mark is marked, below an identification mark reader; moving an electrode tab pressing unit toward the electrode tab to press the electrode tab causing the electrode tab to be perpendicular to the identification mark reader; and identifying the identification mark on the electrode tab by the identification mark reader in a state in which the electrode tab is perpendicular to the identification mark reader.

The identification mark recognition method may further include injecting air toward the electrode tab before the pressing of the electrode tab by the electrode tab pressing unit.

According to another aspect of the present invention, a secondary battery manufacturing method in accordance with claim 13 is provided. The a secondary battery manufacturing method includes: preparing a plurality of unit cells including electrode tabs on which an identification mark is marked; manufacturing an electrode assembly by stacking the plurality of unit cells with a separator interposed therebetween or rolling up the plurality of unit cells placed on a separator sheet with the separator sheet; placing the electrode assembly below an identification mark reader; pressing the electrode tab of an uppermost unit cell of the electrode assembly to be perpendicular to the identification mark reader; and identifying the identification mark on the electrode tab with the identification mark reader in a state in which the electrode tab is perpendicular to the identification mark reader.

The plurality of unit cells may be a half-cell, a mono-cell or a bi-cell.

The electrode assembly may include unit cells of the same type or unit cells of different types.

The secondary battery manufacturing method may further include identifying the electrode tabs of the unit cells with a separate identification mark reader before the manufacturing of the electrode assembly.

### [Advantageous Effects]

According to the present invention, an identification mark on an electrode tab can be identified more effectively by eliminating the electrode tab from being bent or crumpled.

### [Brief Description of the Drawings]

FIG. 1 is a schematic view of an electrode assembly.
FIG. 2 is a perspective view of an identification mark recognition device according to a first embodiment.
FIG. 3 is an exploded perspective view of an identification mark recognition device of the first embodiment.
FIG. 4 is a perspective view of an electrode tab pressing unit.
FIG. 5 is a bottom view of the electrode tab pressing unit.
FIG. 6 is a front view of the electrode tab pressing unit.
FIG. 7 is a schematic diagram illustrating an example in which a pressing string is coupled to a string bracket.
FIGS. 8 to 10 are schematic diagrams illustrating an operation of the identification mark recognition device of the first embodiment.
FIG. 11 is a flowchart of operations of the identification mark recognition device according to the first embodiment.
FIGS. 12 to 15 are schematic diagrams illustrating an operation of the identification mark recognition device according to a second embodiment.
FIG. 16 is a flowchart of operations of the identification mark recognition device according to the second embodiment.
FIG. 17 is a schematic diagram illustrating a process of manufacturing a stack of cells.
FIG. 18 is a schematic diagram illustrating a process of manufacturing folded cells or a stack of folded cells.
FIG. 19 is a schematic diagram illustrating part of a secondary battery manufacturing process using an identification mark recognition device.
FIG. 20 is a flowchart of a secondary battery manufacturing method according to a third embodiment.

### [Detailed Description of Exemplary Embodiments of the Invention]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

An identification mark recognition device of the present invention may be placed in a transfer path of a unit cell or an electrode assembly. When the unit cell or the electrode assembly is input into or output from a predetermined sub-process, the traceability of an intermediate product of a battery cell can be more easily secured in an entire manufacturing process of the battery cell by effectively identifying an identification mark on electrode tabs.

The identification mark may be marked on the electrode tabs in the form of bar-code, quick response (QR) code, or numbers. The identification mark may be printed on the electrode tabs using ink or the like or be engraved in or embossed on the electrode tabs. A form of the identification mark or a method of marking the identification mark on the electrode tabs is not particularly limited, as long as the identification mark can be marked on one surface of each of the electrode tabs and identified by an identification mark reader.

In the present invention, a "unit cell" should be understood as one electrode (a positive electrode or a negative electrode), a half-cell, a mono-cell, or a bi-cell. The electrode may be manufactured by coating one surface or both surfaces of an electrode plate (electrode current collector) with an electrode slurry and forming electrode tabs by a notching process. The half-cell may be manufactured by stacking one electrode and a separator together. The mono-cell may be manufactured by sequentially stacking a positive electrode, a separator, and a negative electrode. The bi-cell may be manufactured by sequentially stacking two first electrodes and a second electrode with polarity different from that of the first electrodes with a separator interposed therebetween. For example, the bi-cell may be manufactured by sequentially stacking a positive electrode, a separator, a negative electrode, a separator, and a positive electrode. Alternatively, the bi-cell may be manufactured by sequentially stacking a negative electrode, a separator, a positive electrode, a separator, and a negative electrode.

In the present invention, an "electrode assembly" may be manufactured by stacking a plurality of unit cells with separators interposed therebetween. For example, the electrode assembly may be manufactured by stacking a plurality of bi-cells on a separator and winding the separator.

Hereinafter, for convenience of description and illustration, embodiments of the present invention will be described with respect to an "electrode assembly." That is, the following description may apply to a "unit cell".

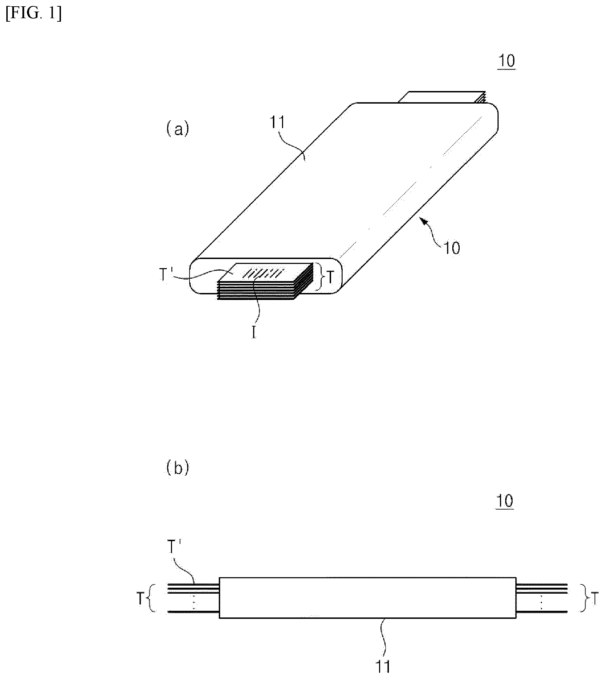

FIG. 1 is a schematic view of an electrode assembly 10.

(a) of FIG. 1 is a perspective view of the electrode assembly 10, and (b) of FIG. 1 is a side view of the electrode assembly 10.

As shown in FIG. 1, the electrode assembly 10 includes a plurality of electrode tabs T. An identification mark may be marked on each of the electrode tabs T. An identification mark reader may identify a identification mark I on an outermost electrode tab T' among the plurality of electrode tabs T. In this case, the identification mark I is exposed to the outside, making it easy for the identification mark reader to identify the identification mark I.

As illustrated in FIG. 1, the electrode tabs T may extend from a body part 11 of the electrode assembly 10 to both ends of the electrode assembly 10. However, the electrode tabs T may extend to one end of the body part 11 according to the design of the electrode assembly 10.

Hereinafter, an identification mark recognition device of the present invention will be described in detail with reference to the drawings.

### (First Embodiment)

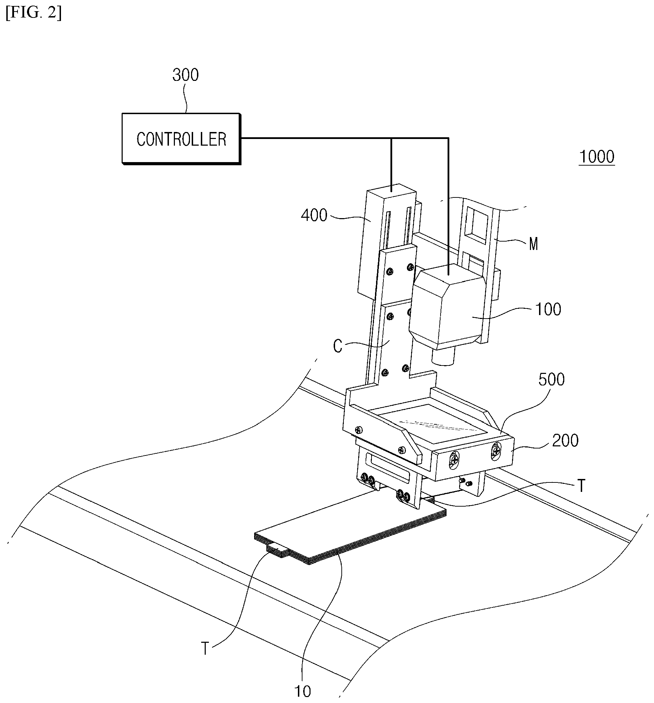

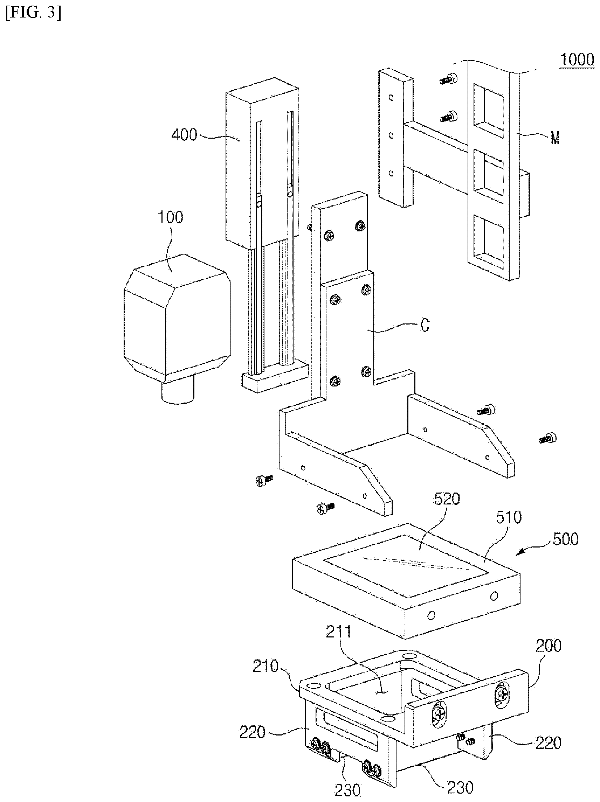

FIG. 2 is a perspective view of an identification mark recognition device 1000 according to the present invention, and FIG. 3 is an exploded perspective view of the identification mark recognition device 1000.

As shown in FIGS. 2 and 3, the identification mark recognition device 1000 includes an identification mark reader 100 that identifies an identification mark I on an electrode tab T of an electrode assembly 10, an electrode tab pressing unit 200 that presses the electrode tab T to be aligned, and a controller 300 that controls the identification mark reader 100 and the electrode tab pressing unit 200.

The identification mark reader 100 may identify the identification mark I on the electrode tab T by photographing or scanning the electrode tab T. The identification mark reader 100 may be, for example, a barcode reader. However, the present invention is not limited thereto and is not particularly limited as long as the identification mark I can be identified or photographed.

As shown in FIGS. 2 and 3, the identification mark reader 100 is provided over the electrode assembly 10. To this end, a mounting bracket M may be installed on the identification mark recognition device 1000 over the electrode assembly to be transferred, and the identification mark reader 100 may be coupled to the mounting bracket M. In this case, the identification mark reader 100 may be provided on an outermost electrode tab T among the electrode tabs T of the electrode assembly 10 to identify an identification mark I on an electrode tab T facing the identification mark reader 100 as a representative identification mark I of the electrode assembly 10.

The mounting bracket M may be a general metal bracket with a predetermined thickness. A shape, material, etc. of the mounting bracket M are not particularly limited as long as the identification mark reader 100 can be fixed to an upper or lower part of a transfer path of the electrode assembly 10.

The identification mark reader 100 may be connected to the controller 300 via wire or wirelessly. The identification mark reader 100 may identify the identification mark I by photographing the electrode tab T according to an operation signal from the controller 300. In addition, the identification mark reader 100 may transmit obtained information about the identified identification mark I to the controller 300.

The electrode tab pressing unit 200 presses the electrode tab such that a surface of the electrode tab on which the identification mark I is marked and the identification mark reader 100 are aligned perpendicular to each other.

The electrode tab pressing unit 200 is arranged slantly at a predetermined angle with respect to a unit cell or the electrode assembly 10. As shown in FIG. 1, the body part 11 of the electrode assembly 10 is thicker than a portion of the electrode assembly 10 from which the electrode tab T protrudes. This also applies to the unit cell. Accordingly, when the electrode tab pressing unit 200 presses the electrode tab T perpendicular to the electrode assembly 10, the electrode tab T is continuously pressed in contact with the body part 11, thus causing damage to the body part 11 (e.g., tearing of the separator, damage to an electrode active material, etc.). However, when the electrode tab pressing unit 200 is arranged slantly, a pressing surface of the electrode tab pressing unit 200 may be first brought into contact with the electrode tab T to minimize damage of the body part 11.

In addition, when the electrode tab pressing unit 200 is excessively inclined, the electrode tab T may be severely deformed (warped or bent) when pressed by the electrode tab pressing unit 200. Accordingly, the above-described angle may be appropriately selected within a range that prevents the electrode tab T from being deformed (warped or bent) when pressed by the electrode tab pressing unit 200.

As shown in FIGS. 2 and 3, an end of the electrode tab pressing unit 200 in a direction of pressing by the electrode tab pressing unit 200 may be provided with a plurality of pressing strings 230 for pressing the electrode tab T.

By providing the pressing strings 230, the electrode tab pressing unit 200 may come into line contact with the electrode tab T by the pressing strings 230 when the electrode tab pressing unit 200 applies pressure. Therefore, a sufficient pressing force may be applied to the electrode tab T by employing the pressing strings 230 instead of other pressing members or alignment members configured to be in point contact with the electrode tab T. In addition, damage to the electrode tab T may be minimized by employing the pressing strings 230 instead of other pressing members or alignment members configured to be in surface contact with the electrode tab T.

The pressing strings 230 may be disposed parallel with a direction in which the electrode tab T extends from a body part of a unit cell or the body part 11 of the electrode assembly 10. An end portion of the electrode tab T may be displaced due to the deformation, such as bending or crumpling, of the electrode tab T. When the pressing strings 230 are disposed perpendicular to the direction in which the electrode tab T extends, the end portion of the electrode tab T may not be capable of being pressed according to a degree of displacement of the end portion of the electrode tab T. However, when the pressing strings 230 are disposed parallel with the direction in which the electrode tab T extends, the pressing strings 230 may come into line contact with the end portion of the electrode tab T to be perpendicular to the end portion. Therefore, the electrode tab T may be effectively aligned by pressing the end portions thereof in a direction opposite to a direction in which the end portions are displaced.

The pressing strings 330 should be appropriately disposed such that the identification mark I is not hidden in a field of view of the identification mark reader 100 when the electrode tab T is pressed by the electrode tab pressing unit 200. To this end, the pressing strings 330 are preferably disposed to press surfaces of the electrode tab T that are spaced a predetermined distance from both ends of the identification mark I.

The number and arrangement of the pressing strings 330 may be appropriately selected such that the identification mark I is not hidden in the field of view of the identification mark reader 100.

An outer surface of the pressing string 330 may be coated with fluorinated ethylene propylene (FEP) or poly tetrafluoro ethylene (PTFE). The FEP and the PTFE are materials with a significantly low coefficient of friction. Therefore, when the outer surface of the pressing string 330 is coated with the FEP or PTFE, damage to the electrode tab T due to friction between the pressing string 330 and the electrode tab T may be minimized when the electrode tab T is pressed.

As shown in FIG. 3, the electrode tab pressing unit 200 includes a main body frame 210 with a through-hole 211 and a string bracket 220 in which the pressing string 230 is installed.

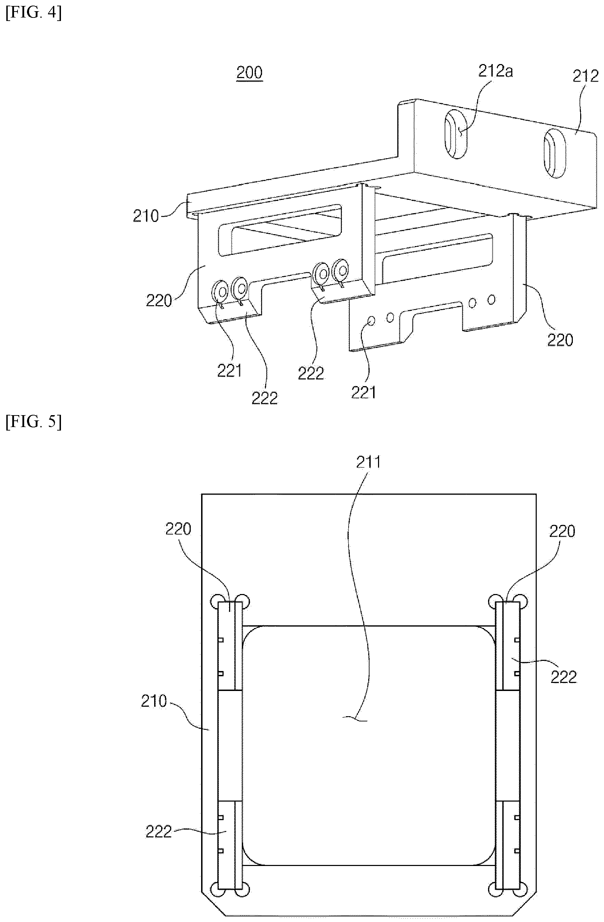

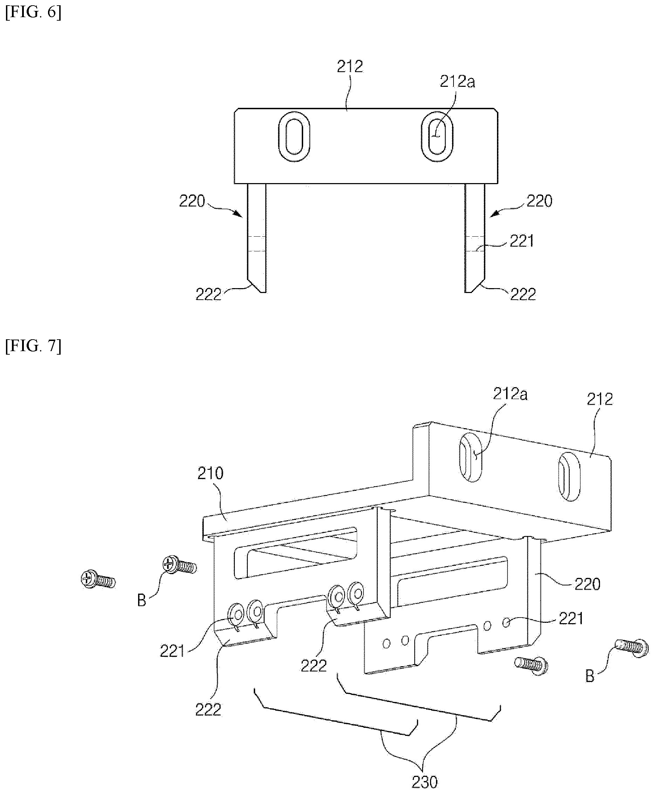

FIG. 4 is a perspective view of the electrode tab pressing unit 200. FIG. 5 is a bottom view of the electrode tab pressing unit 200. FIG. 6 is a front view of the electrode tab pressing unit 200. FIG. 7 is a schematic diagram illustrating an example in which the pressing string 230 is coupled to the string bracket 220.

As shown in FIGS. 4 to 6, the main body frame 210 may have a rectangular frame shape. However, the present invention is not limited thereto, and a shape of the main body frame 210 may be appropriately selected as long as the string bracket 220 can be installed.

The through-hole 211 may be provided in a central area of the main body frame 210 as shown in FIGS. 4 and 5. Total weight of the main body frame 210 may be reduced by providing the through-hole 211 in the main body frame 210.

The through-hole 211 extends in a height direction of the main body frame 210. That is, the main body frame 210 includes the through-hole 211 and thus may have a rectangular frame shape, the central part of which is empty. Therefore, even when the electrode tab T is pressed by the electrode tab pressing unit 200, the identification mark reader 100 may easily identify the identification mark I through the through-hole 211.

The pressing string 230 may be installed on an inner wall of the through-hole 211. However, in this case, when the electrode tab T is pressed, a conveyor that transfers the electrode assembly 10 may come into contact with an outer circumferential surface of the pressing string 230 and thus be damaged. Therefore, as shown in FIGS. 4 to 6, a plurality of string brackets 220 are preferably installed on the main body frame 210 to protrude from the main body frame 210 in a direction in which the electrode tab T is pressed by the electrode tab pressing unit 200.

The string brackets 220 may be disposed to face each other with the through-hole 211 interposed therebetween. In this case, both ends of the pressing string 230 are fixed to the string brackets 220 facing each other and thus the pressing string 230 may be located on an end of the electrode tab pressing unit 200 in the direction of pressing.

An even number of string brackets 220 are preferably provided because the both ends of the pressing string 230 are fixed to the string brackets 220. For example, as shown in FIGS. 4 to 6, a pair of string brackets 220 that are symmetrical to each other may be provided. However, the providing of the pair of string brackets 220 is only an example, and the number of string brackets 220 to be installed is not particularly limited as long as both ends of the pressing string 230 can be easily fixed.

The string brackets 220 are disposed to be spaced a predetermined distance from each other with the through-hole 211 interposed therebetween. In addition, because the electrode tab pressing unit 200 is disposed slantly, the string brackets 220 are also disposed slantly. Therefore, when the string brackets 220 are installed on the main body frame 210 to be excessively spaced apart from each other, the string brackets 220 may apply impact to transfer equipment (e.g., a conveyor) of the electrode assembly 10 when the electrode tab T is pressed. In this case, the transfer equipment may be damaged by the string brackets 220. Therefore, a distance between the string brackets 220 may be appropriately set to prevent the string brackets 220 from being in contact with the transfer equipment of the electrode assembly 10 when the electrode tab pressing unit 200 presses the electrode tab T. In addition, a length of the pressing strings 230 may be determined according to the distance between the string brackets 220.

The string brackets 220 may be plates having a square shape with a predetermined thickness. A shape and thickness of the string brackets 220 may be appropriately changed according to the design of the string brackets 220 or the electrode tab pressing unit 200.

As shown in FIG. 7, the string bracket 220 may be provided with a screwing hole 221 to install the pressing string 230.

As shown in FIG. 7, the pressing string 230 may be coupled to the string bracket 220 by winding both ends of the pressing string 230 around bolts B and screwing the bolts B into screwing holes 221. However, the above coupling method is only one example, and other coupling methods may also be appropriately selected as long as the pressing string 230 can be fixed to the string bracket 220.

As shown in FIG. 7, the pressing strings 230 may be coupled to cover ends of the string brackets 220 facing each other. That is, one end of each of the pressing strings 230 may be fixed to the screwing hole 221, and main bodies thereof extending from both ends of the pressing strings 230 may be bent toward other string brackets 220 facing each other.

In this case, the pressing strings 230 may be excessively bent due to edges of ends of the string brackets 220, thus causing stress to be applied to the pressing strings 230. To minimize stress to be applied, a chamfer surface 222 inclined toward the other string brackets 220 facing each other may be provided as shown in FIG. 7.

The chamfer surface 222 may be formed by chamfering an end surface of the string bracket 220.

In FIG. 7, the chamfer surface 222 is shown as a flat surface. However, the chamfer surface 222 may be manufactured to be a curved surface bulging toward the direction of pressing.

The electrode tab pressing unit 200 may be coupled to the identification mark reader 100 to be movable from the identification mark reader 100. As the electrode tab pressing unit 200 is moved toward the electrode tab T from the identification mark reader 100, the identification mark on the electrode tab T may be pressed by the electrode tab pressing unit 200.

As shown in FIG. 2, the identification mark reader 100 may be positioned on the same axis as the electrode tab pressing unit 200. According to the invention, the identification mark reader 100 is placed over the electrode assembly 10 at the same angle as the angle at which the electrode tab pressing unit 200 is placed.

According to the invention, as shown in FIG. 3, the through-hole 211 and the identification mark reader 100 are arranged on the same axis. In this case, the identification mark reader 100 may be placed on a unit cell.

By arranging the identification mark reader 100 and the electrode tab pressing unit 200 on the same axis, interference caused by the structure of the electrode tab pressing unit 200 may be minimized when the identification mark I is identified by the identification mark reader 100. Therefore, even when the electrode tab pressing unit 200 presses the electrode tab T, the identification mark I may be positioned in the field of view of the identification mark reader 100 through the through-hole 211. In addition, the layout design of the identification mark reader 100 and the electrode tab pressing unit 200 may be simplified by arranging the identification mark reader 100 and the electrode tab pressing unit 200 at the same angle.

In the present embodiment, the electrode tab pressing unit 200 moves linearly back and forth. The identification mark recognition device 1000 of the present embodiment may include a linear movement mechanism 400 for linear movement of the electrode tab pressing unit 200.

The linear movement mechanism 400 may be a pneumatic or hydraulic cylinder, a direction of linear movement of which changes according to a direction in which a fluid is supplied. However, the linear movement mechanism 400 is not limited thereto, and is not particularly limited as long as the linear movement mechanism 400 is capable of moving linearly back and forth according to an operating signal from the controller 300.

As shown in FIGS. 2 and 3, one end of the linear movement mechanism 400 may be coupled to the mounting bracket M, and another end thereof may be connected to the electrode tab pressing unit 200 through a connection bracket C. In this case, a linear movement part (e.g., a cylinder rod) of the linear movement mechanism 400 moves linearly, thus causing the connection bracket C to be moved linearly. In this case, because the electrode tab pressing unit 200 is coupled to the connecting bracket C, the electrode tab pressing unit 200 is also moved linearly together with the connection bracket C. As described above, the electrode tab pressing unit 200 is coupled to the identification mark reader 100 to be movable from the identification mark reader 100 by the linear movement mechanism 400.

A shape of the connection bracket C is not particularly limited as long as an appropriate mounting surface can be provided to connect the electrode tab pressing unit 200 to the linear movement mechanism 400.

As shown in FIGS. 2 and 3, the identification mark recognition device 1000 of the present embodiment may further include a lighting member 500 between the identification mark reader 100 and the electrode tab T.

The lighting member 500 may emit light onto a surface of the electrode tab T on which the identification mark I is marked to assist the identification mark reader 100 to identify the identification mark I.

The lighting member 500 may include a lighting frame 510 in which a light source is installed and lighting glass 520 installed in a central area of the lighting member 500.

The lighting frame 510 may be manufactured in a square frame shape whose central part is empty. A light source that generates light may be installed inside the lighting frame 510. In this case, the empty central part of the lighting frame 510 may be covered with the lighting glass 520 to protect the light source from external contaminants (dust, etc.).

The lighting member 500 may be arranged on the same axis as the identification mark reader 100. As described above, because the lighting member 500 and the identification mark reader 100 are arranged in a straight line, an amount of light that is emitted to the electrode tab T, reflected and collected on the identification mark reader 100 may be maximized. Therefore, the identification mark reader 100 may identify the identification mark I more clearly.

The lighting member 500 may also be arranged on the same axis as the electrode tab pressing unit 200 as shown in FIGS. 2 and 3. In this case, as shown in FIG. 3, the lighting frame 510 may be connected to the connection bracket C, and the electrode tab pressing unit 200 may be coupled to the lighting frame 510. To this end, the main body frame 210 of the electrode tab pressing unit 200 may include a connection block 212 to be coupled to the lighting frame 510.

The connection block 212 may be provided with a coupling hole 212a. The electrode tab pressing unit 200 and the lighting member 500 may be coupled to each other by fixing a separate fastening member, such as a bolt, in the lighting frame 510 while passing through the coupling hole 212a.

The electrode tab pressing unit 200 aligns the electrode tab T such that the surface of the electrode tab T on which the identification mark I is marked is perpendicular to the identification mark reader 100, before the identification mark I is identified by the identification mark reader 100. As described above, an identification mark recognition rate of the identification mark reader 100 may be improved by aligning the electrode tab T at a predetermined position.

The identification mark recognition device 1000 includes the controller 300 that controls the identification mark reader 100 and the linear movement mechanism 400.

The controller 300 may be an equipment control program that controls equipment in each sub-process. Alternatively, the controller 300 may be separate software installed in an entire process control system.

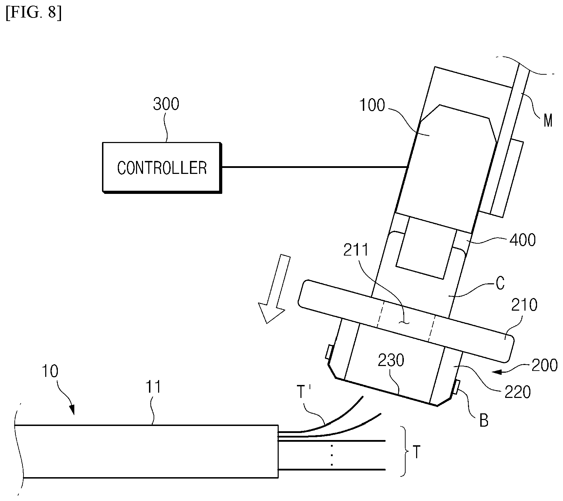

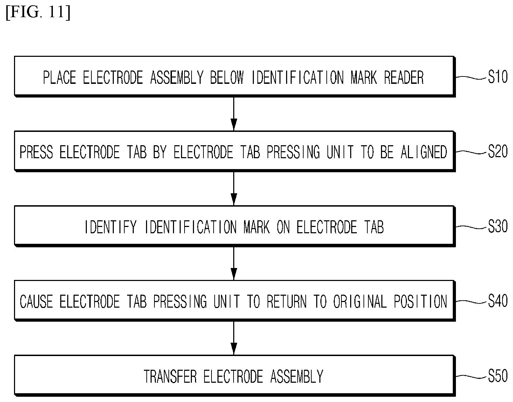

FIGS. 8 to 10 are schematic diagrams illustrating an operation of the identification mark recognition device 1000 of the current embodiment. FIG. 11 is a flowchart of operations of the identification mark recognition device 1000 of the current embodiment.

First, the electrode assembly 10 is transferred by a conveyor or the like and placed below the identification mark reader 100 (S10). In this case, a unit cell may also be disposed below the identification mark reader 100.

As shown in FIG. 8, an outermost electrode tab T' among the electrode tabs T of the electrode assembly 10 may be pushed out or lean to one side and thus be bent during the manufacture of the electrode assembly 10.

When the electrode assembly 10 is disposed below the identification mark reader 100, the controller 300 controls the linear movement mechanism 400 to move the electrode tab pressing unit 200 toward the electrode tab T, as shown in FIG. 8.

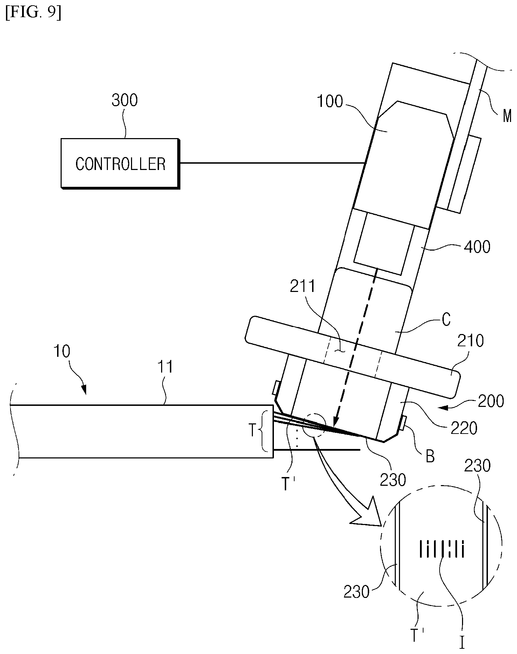

The electrode tab pressing unit 200 presses the outermost electrode tab T' or a plurality of electrode tabs T until the outermost electrode tab T' is aligned to be perpendicular to the identification mark reader 100 (S20). In this case, as shown in FIG. 9, the deformation of the outermost electrode tab T' is canceled and thus the identification mark reader 100 may easily identify the identification mark I on the outermost electrode tab T'.

A linear movement stroke of the linear movement mechanism 400 for the electrode tab pressing unit 200 to press the electrode tab T may be set and stored in advance by the controller 300. The controller 300 may control the linear movement mechanism 400 by the stored stroke to allow the electrode tab pressing unit 200 to press the electrode tab T regularly.

In this case, the linear movement stroke of the linear movement mechanism 400 may be appropriately selected in consideration of a thickness of all the electrode tabs T of the electrode assembly 10 below the identification mark reader 100, the distance between the identification mark reader 100 and the electrode tabs T, and whether the electrode tab pressing unit 200 is in contact with the transfer equipment of the electrode assembly 10. For example, when the stroke is excessively increased, the string bracket 220 of the electrode tab pressing unit 200 may apply impact the transfer equipment, thus causing damage to the transfer equipment.

When the outermost electrode tab T' is aligned, the controller 300 controls the identification mark reader 100 to identify the identification mark on the outermost electrode tab T' as shown in FIG. 9 (S30). In this case, as shown in FIG. 9, the through-hole 211 and the identification mark reader 100 are arranged on the same axis. Therefore, the identification mark reader 100 may easily identify the identification mark I through the through-hole 211.

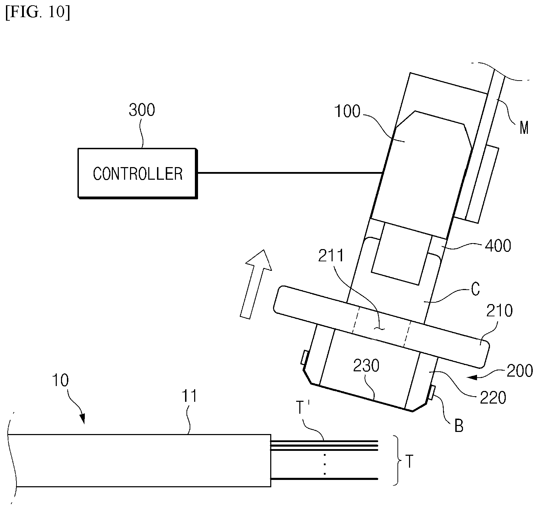

Thereafter, as shown in FIG. 10, the controller 300 controls the linear movement mechanism 400 to cause the electrode tab pressing unit 200 to return to an original position (S40).

As the electrode tab pressing unit 200 returns to the original positions and the pressing of the electrode tabs T and T' is canceled, the electrode assembly 10 may be transferred by a conveyor or the like to perform a next process (S50).

### (Second Embodiment)

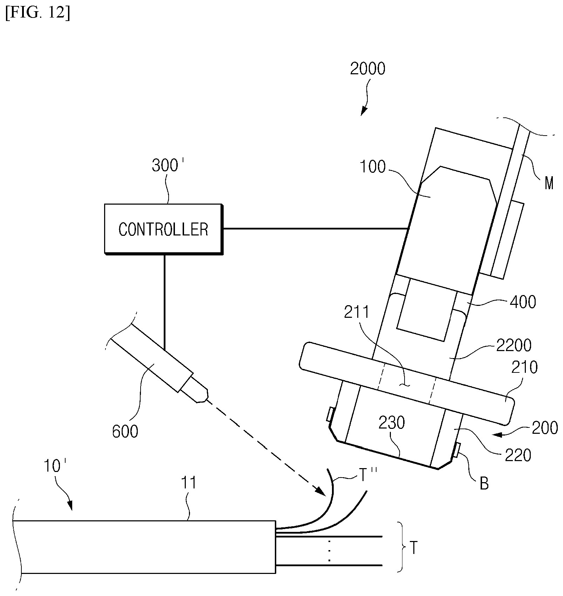

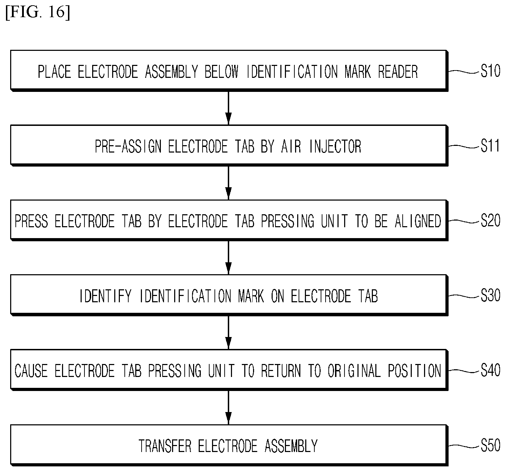

FIGS. 12 to 15 are schematic diagrams illustrating an operation of the identification mark recognition device 2000 of a second embodiment. FIG. 16 is a flowchart of operations of the identification mark recognition device 2000 of the current embodiment.

As shown in FIG. 12, an outermost electrode tab T" of an electrode assembly 10 may be excessively bent. In this case, when the electrode tab T" is directly pressed, the electrode tab T" is additionally deformed in a direction in which the electrode tab T" has been deformed, thus causing damage to the electrode tab T". Therefore, before pressing the electrode tab T", it is necessary to reduce a degree of curvature of the electrode tab T" to some extent.

In the present embodiment, the identification mark recognition device 2000 is different from the identification mark recognition device 1000 of the first embodiment in that the identification mark recognition device 2000 further includes an air injector 600 that injects air to the electrode tab T" before the electrode tab T" is pressed. In addition, components of the identification mark recognition device 2000 that are the same as those of the identification mark recognition device 1000 of the first embodiment may also apply to the present embodiment and thus a detailed description thereof is omitted here.

The air injector 600 may be an air nozzle for injecting compressed air.

A position at which the air injector 600 is installed is not particularly limited as long the air injector 600 is capable of injecting compressed air in a direction toward which the outermost electrode tab T" extends.

In the present embodiment, excessive deformation of the electrode tab T" may be eliminated to some extent by displacing the excessively deformed (bent) electrode tab T" in a direction opposite to the direction in which the electrode tab T" has been deformed by the air injector 600. Accordingly, damage to the electrode tab T" when pressed may be minimized. Therefore, an electrode tab pressing unit 200 may press electrode tabs T more stably. In addition, foreign substances such as dust that may be attached to an identification mark I or a lighting glass 520 of a lighting member 500 may be removed by injected air. In this case, an identification mark recognition rate of an identification mark reader 100 may greatly improve.

Air injection by the air injector 600 may be controlled by a controller 300'.

Control performed by the controller 300' may be similar to control performed by the controller 300 according to the first embodiment. For example, operation S11 of pre-aligning electrode tabs may be added between operations S10 and S20, and the other operations S30 to S50 may be controlled in the same manner as in the first embodiment.

Specifically, when the electrode assembly 10 is located below the identification mark reader 100 (S10), the controller 300' may control the air injector 600 to pre-align the outermost electrode tab T", as shown in FIG. 12 (S11).

Thereafter, the controller 300' may control a linear movement mechanism 400 to allow the electrode tab pressing unit 200 to press the electrode tab to be aligned.

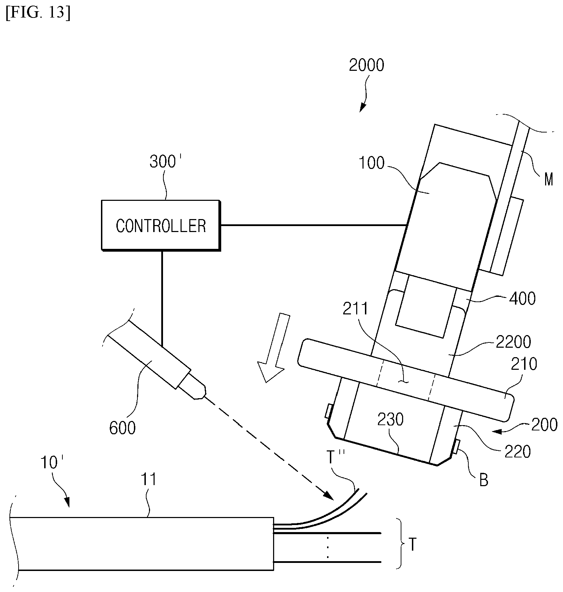

In this case, as illustrated in FIG. 13, air injection by the air injector 600 may be maintained until the electrode tab pressing unit 200 presses the electrode tabs T.

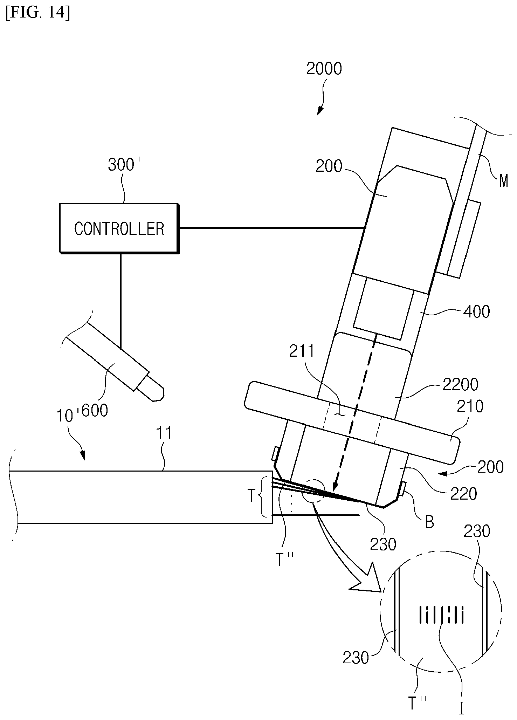

Next, as illustrated in FIG. 14, the identification mark reader 100 identifies an identification mark I on the electrode tab T" (S30). In this case, the air injector 600 may continuously inject air. Alternatively, the injection of air may be ended at a point in time when the pressing by the electrode tab pressing unit 200 is completed. A point in time when the injection of air is ended is not particularly limited, as long as the air injector 600 pre-aligns the electrode tabs T and the pressing of the electrode tabs T by the electrode tab pressing unit 200 is completed.

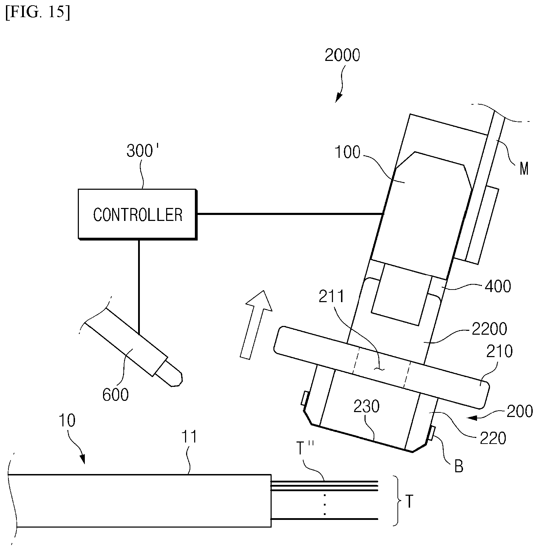

Thereafter, when the identification of the identification mark I is completed, the controller 300' causes the electrode tab pressing unit 200 to return to an original position as shown in FIG. 15 (S40).

Finally, the electrode assembly 10 may be transferred by a conveyor or the like to perform the next process.

As described above, the recognition rate of an identification mark I on the electrode tabs T can be improved by aligning the electrode tabs T to be perpendicular to the identification mark reader 100. In addition, as in the present embodiment, the air injector 600 may be further provided to pre-align the electrode tabs T. In this case, the electrode tabs T may be pressed more stably.

### (Third Embodiment)

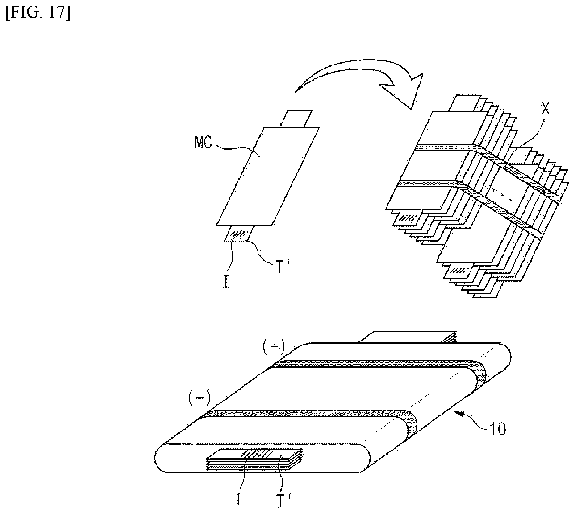

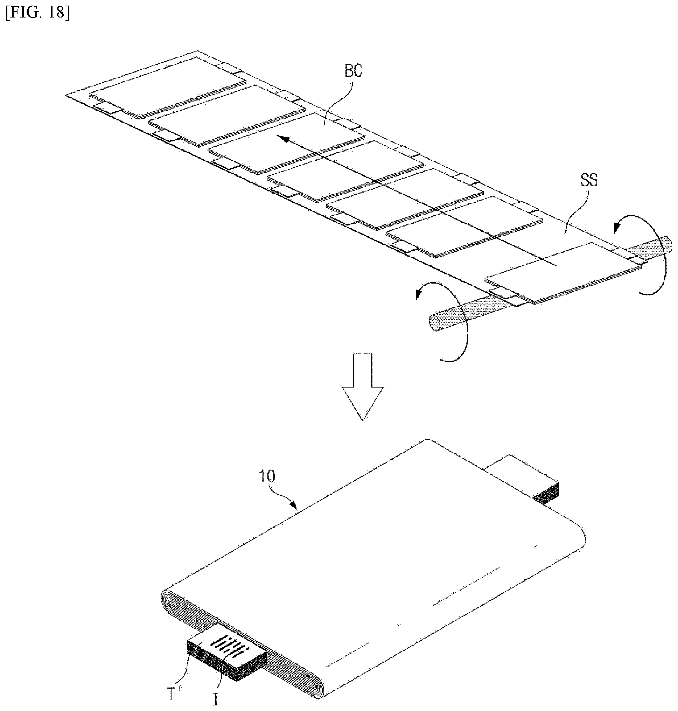

FIG. 17 is a schematic diagram illustrating a process of manufacturing a stack of cells. FIG. 18 is a schematic diagram illustrating a process of manufacturing folded cells or a stack of folded cells.

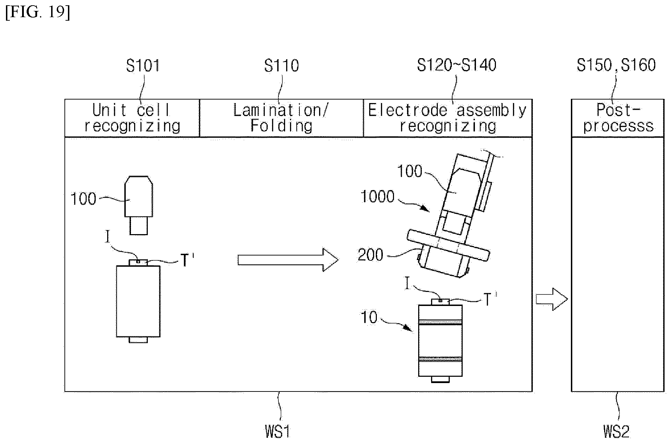

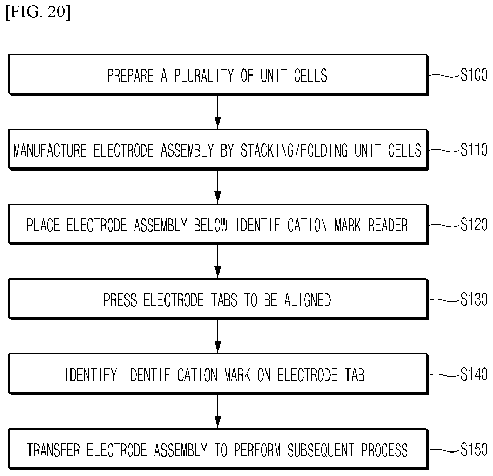

FIG. 19 is a schematic diagram illustrating part of a secondary battery manufacturing process using an identification mark recognition device. FIG. 20 is a flowchart of a secondary battery manufacturing method according to a third embodiment.

FIG. 17 illustrates a process of manufacturing a stacked cell type electrode assembly 10 by stacking unit cells. The unit cells to be stacked may be of the same type (e.g., mono-cells (MC)). Alternatively, a stack of the same type of unit cells may include different types of unit cells (e.g., half-cells). For example, half-cells may be placed at the top and/or the bottom of a stack of mono-cells. The stacked cell type electrode assembly 10 may include a fixing tape X to fix the unit cells. Each of the unit cells includes an electrode tab T on which an identification mark I is marked. An identification mark I is provided on an electrode tab T' of a unit cell (e.g., a mono-cell (MC) or a half-cell) stacked on the top of the stack of cells.

Referring to FIG. 18, a plurality of unit cells (e.g., bi-cells BC) are placed on a long separator sheet SS. In this state, the separator sheet SS is folded sequentially. That is, the electrode assembly 10 may be manufactured in the form of folded cells or a stack of folded cells by rolling the bi-cells BC up with the separator sheet SS.

The unit cells stacked by rolling them up with the separator sheet SS also include electrode tabs T on which the identification mark I is marked. The identification mark I is also provided on an electrode tab T' of a unit cell (e.g., a bi-cell BC) stacked on the top of the stack of folded cells.

FIG. 19 illustrates a part of a secondary battery manufacturing process in which an electrode assembly 10 is manufactured using unit cells. Referring to FIGS. 19 and 20, in order to manufacture the electrode assembly 10, first, a plurality of unit cells with electrode tabs T on which an identification mark I is marked are prepared (S100).

The unit cells may be transferred to a work stage WS1 for manufacturing an electrode assembly. For example, the plurality of unit cells may be loaded on the work stage WS1 by a conveyor or a loader (not shown). As described above, the unit cell is a half-cell, a mono-cell, or a bi-cell. Alternatively, the electrode assembly may include unit cells of the same type or different types.

Operation S101 of identifying the electrode tabs T of the unit cells by a separate identification mark reader 100 may be further performed before the manufacture of the electrode assembly 10. In this case, the identification mark reader 100 may be of the same type as or a different type from that included in the identification mark recognition device 1000 or 2000 of the first or second embodiment. The type, data, etc. of each of the unit cells included in the electrode assembly manufactured with the unit cells may be identified by identifying the identification mark I on the electrode tab T of each of the unit cells.

In this case, when the identification mark I on each of the unit cells is identified, the electrode tab pressing unit 200 of the identification mark recognition device 1000 or 2000 according to the first or second embodiments may not be applied. Because the number of stacked electrode tabs in each of the unit cells is not large, a degree to which the electrode tabs are bent or crumpled is not severe. When the number of stacked electrode tabs is small, the visibility of the identification mark by the identification mark reader can be increased by supporting the electrode tabs by a predetermined tab guide. In this case, when the electrode tabs of the unit cells are pressed by the electrode tab pressing unit 200, the electrode tabs are likely to be damaged or bent in a direction opposite to a direction of pressing. Therefore, the identification mark on each of the units cells can be identified simply by a general identification mark reader.

Next, the plurality of unit cells, the identification mark of which are identified may be moved from the work stage WS1 to perform a lamination process thereon to stack the plurality of unit cells with a separator interposed therebetween, thereby completing the electrode assembly 10 in the form of a stack of cells. Alternatively, the plurality of unit cells on a separator may be rolled up in the separator sheet to manufacture an electrode assembly in the form of folded cells or a stack of folded cells (S110).

Manufactured electrode assemblies are moved from the work stage WS1 and placed below the identification mark reader (S120).

In the electrode assembly 10 described above, the plurality of unit cells are laid to overlap each other and thus the electrode tabs are very likely to be deformed due to various factors, e.g., when the electrode tabs lean to one side or be pushed out, during the stacking of the unit cells or during the rolling of the unit cells with the separator sheet SS. Accordingly, operation S130 of pressing the electrode tabs such that an electrode tab of an uppermost unit cell of the electrode assembly is perpendicular to the identification mark reader should be performed. That is, as shown in FIGS. 9 and 14, electrode tabs should be pressed to be aligned such that the electrode tab T' is perpendicular to the identification mark reader. As shown in FIGS. 9 and 14, the electrode tab pressing unit 200 of the identification mark recognition device 1000 is used to align upper surfaces of the electrode tabs to be perpendicular to the identification mark reader.

The identification mark reader 100 may identify the identification mark on the electrode tabs in a state in which the electrode tabs are perpendicular to the identification mark reader 100 (S140).

The identification mark I on the electrode tab T' of the uppermost unit cell of the electrode assembly may be a representative identification (ID) of the electrode assembly.

The representative ID may be related to information of the identification mark I on the electrode tab of each of the unit cells of the electrode assembly. That is, the types, data, etc. of the unit cells included in the electrode assembly may be identified by identifying the representative ID. In addition, the representative ID may include information about manufacturing histories, e.g., lot numbers, each piece of process equipment, and production line information.

The ID may include symbols indicating a sequence number. The symbols may include Arabic numerals but are not limited thereto. The symbols may include arbitrary characters providing information about the sequence number.

The electrode assembly whose representative ID has been identified may be moved to perform a subsequent process (S150). In this case, such electrode assemblies are moved to a work stage WS2 of the subsequent process by an unloader or a conveyor (not shown). In the subsequent process (S160), various processes are performed on the electrode assembly. For example, a process of cutting the electrode tabs of the electrode assembly 10 and welding electrode leads, a process of putting the electrode assembly with the welded electrode leads into a case and injecting an electrolyte to manufacture a so-called packaging cell, an activation process for giving electrical characteristics to the packaging cell, a process of assembling activated secondary battery cells to manufacture a module and a pack, etc. are performed.

In the above subsequent processes, operations of identifying the representative ID of the electrode assembly may also be needed. Accordingly, similarly, in a subsequent process, an electrode tab of an uppermost unit cell of the electrode assembly may be pressed to be perpendicular to the identification mark reader, so that the identification mark reader may identify an identification mark on the uppermost unit cell in this state.

Accordingly, identification information of each of unit cells and an electrode assembly including the unit cells can be accurately specified throughout an entire secondary battery manufacturing process. In addition, manufacturing histories of various types of secondary batteries can be easily figured out, based on the identification information.

The above description is only an example of the technical idea of the present invention and various modification and changes may be made by those of ordinary skill in the technical field to which the present invention pertains.

Therefore, the drawings of the present invention set forth herein are intended not to limit the present invention. The scope of protection for the present invention is defined by the claims.

In the present specification, terms representing directions such as upper, lower, left, right, forward and backward are used only for convenience of description and thus it will be obvious that these terms may be changed according to a position of an object or an observer.

### (Reference Numerals)

10: electrode assembly
100: identification mark reader
200: electrode tab pressing unit
210: main body frame
220: string bracket
230: pressing string
300, 300': controller
400: linear movement mechanism
500: lighting member
600: air injector
1000, 2000: identification mark recognition device
I: identification mark
T, T', T": electrode tab

## Claims

1. An identification mark recognition device (1000, 2000) comprising:
an identification mark reader (100) configured to identify an identification mark (I) on an electrode tab (T, T', T") of a unit cell or an electrode assembly (10);
an electrode tab pressing unit (200) configured to press the electrode tab (T, T', T") to cause a surface of the electrode tab (T, T', T") on which the identification mark (I) is marked to be aligned with respect to the identification mark reader (100); and
a controller (300, 300') configured to control the electrode tab pressing unit (200) and the identification mark reader (100) to allow the identification mark reader (100) to identify the identification mark (I) after the pressing of the electrode tab (T, T', T") by the electrode tab pressing unit (200),
wherein the electrode tab pressing unit (200) is arranged to be inclined at a predetermined angle with respect to the unit cell or the electrode assembly (10),
wherein the electrode tab pressing unit (200) comprises a main body frame (210) with a through-hole (211), and
wherein the identification mark reader (100) is slantingly arranged over the unit cell or the electrode assembly (10) to be on the same axis as the through-hole (211).

2. The identification mark recognition device (1000, 2000) of claim 1, wherein the identification mark reader (100) is arranged over the unit cell or the electrode assembly (10) at the same angle as the angle at which the electrode tab pressing unit (200) is arranged,
the electrode tab pressing unit (200) is coupled to the identification mark reader (100) and configured to be movable from the identification mark reader (100), and
the electrode tab pressing unit (200) is configured to press the surface of the electrode tab (T, T', T") on which the identification mark (I) is marked, as the electrode tab pressing unit (200) is moved toward the electrode tab (T, T', T") from the identification mark reader (100).

3. The identification mark recognition device of claim 1 or 2, wherein an end of the electrode tab pressing unit (200) in a direction of pressing by the electrode tab pressing unit (200) is provided with a plurality of pressing strings (230, 330) configured to press the electrode tab (T, T', T").

4. The identification mark recognition device (1000, 2000) of claim 3, wherein outer surfaces of the plurality of pressing strings (230, 330) are coated with fluorinated ethylene propylene (FEP) or poly tetrafluoro ethylene (PTFE).

5. The identification mark recognition device (1000, 2000) of claim 3 or 4, wherein the plurality of pressing strings (230, 330) are arranged to be parallel to a direction in which the electrode tab (T, T', T") extends from a body part (11) of the unit cell or a body part (11) of the electrode assembly (10).

6. The identification mark recognition device (1000, 2000) of any one of claims 3 to 5, wherein the plurality of pressing strings (230, 330) are arranged to press surfaces of the electrode tab (T, T', T") that are spaced a predetermined distance from both sides of the identification mark (I).

7. The identification mark recognition device of any one of claims 3 to 6, wherein the electrode tab pressing unit (200) comprises a plurality of string brackets (220) installed on the main body frame (210) that protrude from the main body frame (210) in the direction of pressing by the electrode tab pressing unit (200),
wherein the plurality of string brackets (220) are arranged to face each other with the through-hole (211) interposed therebetween, and
both ends of the plurality of pressing strings (230, 330) are fixed on the plurality of string brackets (220) facing each other.

8. The identification mark recognition device (1000, 2000) of claim 7, wherein the plurality of pressing strings (230, 330) are coupled to the plurality of string brackets (220) to cover ends of the plurality of string brackets (220) facing each other, and
the end of each of the plurality of string brackets (220) facing each other are provided with a chamfer surface (222) inclined toward the other string bracket (220).

9. The identification mark recognition device (1000, 2000) of any one of claims 1 to 8, further comprising a lighting member (500) between the identification mark reader (100) and the electrode tab (T, T', T"),
wherein the lighting member (500) is on the same axis as the identification mark reader (100).

10. The identification mark recognition device (2000) of any one of claims 1 to 7, further comprising an air injector (600) configured to inject air toward the electrode tab (T, T', T") before the electrode tab (T, T', T") is pressed by the electrode tab pressing unit (200).

11. An identification mark recognition method, using the identification mark recognition device (1000, 2000) of any one of the preceding claims, comprising:
placing a unit cell or an electrode assembly (10), which includes an electrode tab (T, T', T") on which an identification mark (I) is marked, below the identification mark reader (100);
moving the electrode tab pressing unit (200) toward the electrode tab (T, T', T") to press the electrode tab (T, T', T") causing the electrode tab (T, T', T") to be aligned with respect to the identification mark reader (100), and
identifying the identification mark (I) on the electrode tab (T, T', T") by the identification mark reader (100) in a state in which the electrode tab (T, T', T") is perpendicular to the identification mark reader (100).

12. The identification mark recognition method of claim 11, further comprising injecting air toward the electrode tab (T, T', T") before the pressing of the electrode tab (T, T', T") by the electrode tab pressing unit (200).

13. A secondary battery manufacturing method, comprising:
preparing a plurality of unit cells including electrode tabs (T, T', T") on which an identification mark (I) is marked;
manufacturing an electrode assembly (10) by stacking the plurality of unit cells with a separator interposed therebetween or rolling up the plurality of unit cells placed on a separator sheet with the separator sheet; and
recognizing the identification mark (I) by means of the method of claim 11 or 12.

## Patentansprüche

1. Vorrichtung (1000, 2000) zur Erkennung einer Identifikationsmarkierung, umfassend:
ein Identifikationsmarkierungs-Lesegerät (100), das dazu eingerichtet ist, eine Identifikationsmarkierung (I) auf einer Elektrodenlasche (T, T', T") einer Einheitszelle oder einer Elektrodenanordnung (10) zu identifizieren;
eine Elektrodenlaschen-Andrückeinheit (200), die dazu eingerichtet ist, die Elektrodenlasche (T, T', T") anzudrücken, um zu bewirken, dass eine Oberfläche der Elektrodenlasche (T, T', T"), auf der die Identifikationsmarkierung (I) aufgebracht ist, in Bezug auf das Identifikationsmarkierungs-Lesegerät (100) ausgerichtet wird; und
eine Steuerung (300, 300'), die dazu eingerichtet ist, die Elektrodenlaschen-Andrückeinheit (200) und das Identifikationsmarkierungs-Lesegerät (100) zu steuern, um es dem Identifikationsmarkierungs-Lesegerät (100) zu ermöglichen, die Identifikationsmarkierung (I) nach dem Andrücken der Elektrodenlasche (T, T', T") durch die Elektrodenlaschen-Andrückeinheit (200) zu identifizieren,
wobei die Elektrodenlaschen-Andrückeinheit (200) in einem vorbestimmten Winkel in Bezug auf die Einheitszelle oder die Elektrodenanordnung (10) geneigt angeordnet ist,
wobei die Elektrodenlaschen-Andrückeinheit (200) einen Hauptkörperrahmen (210) mit einer Durchgangsöffnung (211) umfasst, und
wobei das Identifikationsmarkierungs-Lesegerät (100) schräg oberhalb der Einheitszelle oder der Elektrodenanordnung (10) angeordnet ist, sodass es sich auf derselben Achse wie die Durchgangsöffnung (211) befindet.

2. Vorrichtung (1000, 2000) zur Erkennung einer Identifikationsmarkierung nach Anspruch 1, wobei das Identifikationsmarkierungs-Lesegerät (100) über der Einheitszelle oder der Elektrodenanordnung (10) unter demselben Winkel angeordnet ist, unter dem die Elektrodenlaschen-Andrückeinheit (200) angeordnet ist,
die Elektrodenlaschen-Andrückeinheit (200) mit dem Identifikationsmarkierungs-Lesegerät (100) gekoppelt und dazu eingerichtet ist, von dem Identifikationsmarkierungs-Lesegerät (100) weg bewegbar zu sein, und
die Elektrodenlaschen-Andrückeinheit (200) dazu eingerichtet ist, die Oberfläche der Elektrodenlasche (T, T', T"), auf der die Identifikationsmarkierung (I) aufgebracht ist, anzudrücken, während die Elektrodenlaschen-Andrückeinheit (200) von dem Identifikationsmarkierungs-Lesegerät (100) weg in Richtung der Elektrodenlasche (T, T', T") bewegt wird.

3. Vorrichtung zur Erkennung einer Identifikationsmarkierung nach Anspruch 1 oder 2, wobei ein in der Andrückrichtung der Elektrodenlaschen-Andrückeinheit (200) liegendes Ende der Elektrodenlaschen-Andrückeinheit (200) mit mehreren Andrückschnüren (230, 330) versehen ist, die dazu eingerichtet sind, die Elektrodenlasche (T, T', T") anzudrücken.

4. Vorrichtung (1000, 2000) zur Erkennung einer Identifikationsmarkierung nach Anspruch 3, wobei Außenflächen der mehreren Andrückschnüre (230, 330) mit fluoriertem Ethylen-Propylen (FEP) oder Polytetrafluorethylen (PTFE) beschichtet sind.

5. Vorrichtung (1000, 2000) zur Erkennung einer Identifikationsmarkierung nach Anspruch 3 oder 4, wobei die mehreren Andrückschnüre (230, 330) parallel zu einer Richtung angeordnet sind, in der sich die Elektrodenlasche (T, T', T") von einem Körperabschnitt (11) der Einheitszelle oder einem Körperabschnitt (11) der Elektrodenanordnung (10) erstreckt.

6. Vorrichtung (1000, 2000) zur Erkennung einer Identifikationsmarkierung nach einem der Ansprüche 3 bis 5, wobei die mehreren Andrückschnüre (230, 330) so angeordnet sind, dass sie Oberflächen der Elektrodenlasche (T, T', T") andrücken, die sich auf beiden Seiten der Identifikationsmarkierung (I) jeweils in einem vorbestimmten Abstand von dieser befinden.

7. Vorrichtung zur Erkennung einer Identifikationsmarkierung nach einem der Ansprüche 3 bis 6, wobei die Elektrodenlaschen-Andrückeinheit (200) mehrere Schnurhalterungen (220) umfasst, die an dem Hauptkörperrahmen (210) angebracht sind und in der Andrückrichtung der Elektrodenlaschen-Andrückeinheit (200) von dem Hauptkörperrahmen (210) vorstehen,
wobei die mehreren Schnurhalterungen (220) einander zugewandt angeordnet sind, wobei die Durchgangsöffnung (211) zwischen ihnen angeordnet ist, und
jeweils beide Enden der mehreren Andrückschnüre (230, 330) an den einander zugewandten Schnurhalterungen (220) befestigt sind.

8. Vorrichtung (1000, 2000) zur Erkennung einer Identifikationsmarkierung nach Anspruch 7, wobei die mehreren Andrückschnüre (230, 330) so mit den mehreren Schnurhalterungen (220) gekoppelt sind, dass sie die einander zugewandten Enden der mehreren Schnurhalterungen (220) abdecken, und
jedes der einander zugewandten Enden der mehreren Schnurhalterungen (220) mit einer Fasenfläche (222) versehen ist, die zu der jeweils anderen Schnurhalterung (220) hin geneigt ist.

9. Vorrichtung (1000, 2000) zur Erkennung einer Identifikationsmarkierung nach einem der Ansprüche 1 bis 8, ferner umfassend ein Beleuchtungselement (500) zwischen dem Identifikationsmarkierungs-Lesegerät (100) und der Elektrodenlasche (T, T', T"),
wobei das Beleuchtungselement (500) auf derselben Achse wie das Identifikationsmarkierungs-Lesegerät (100) angeordnet ist.

10. Vorrichtung (2000) zur Erkennung einer Identifikationsmarkierung nach einem der Ansprüche 1 bis 7, ferner umfassend einen Luftinjektor (600), der dazu eingerichtet ist, Luft in Richtung der Elektrodenlasche (T, T', T") einzublasen, bevor die Elektrodenlasche (T, T', T") durch die Elektrodenlaschen-Andrückeinheit (200) angedrückt wird.

11. Verfahren zur Erkennung einer Identifikationsmarkierung unter Verwendung der Vorrichtung (1000, 2000) zur Erkennung einer Identifikationsmarkierung nach einem der vorhergehenden Ansprüche, umfassend:
Anordnen einer Einheitszelle oder einer Elektrodenanordnung (10), die eine Elektrodenlasche (T, T', T") umfasst, auf der eine Identifikationsmarkierung (I) aufgebracht ist, unterhalb des Identifikationsmarkierungs-Lesegeräts (100);
Bewegen der Elektrodenlaschen-Andrückeinheit (200) in Richtung der Elektrodenlasche (T, T', T"), um die Elektrodenlasche (T, T', T") anzudrücken, wodurch die Elektrodenlasche (T, T', T") in Bezug auf das Identifikationsmarkierungs-Lesegerät (100) ausgerichtet wird, und
Identifizieren der Identifikationsmarkierung (I) auf der Elektrodenlasche (T, T', T") mittels des Identifikationsmarkierungs-Lesegeräts (100) in einem Zustand, in dem die Elektrodenlasche (T, T', T") senkrecht zu dem Identifikationsmarkierungs-Lesegerät (100) ausgerichtet ist.

12. Verfahren zur Erkennung einer Identifikationsmarkierung nach Anspruch 11, ferner umfassend das Einblasen von Luft in Richtung der Elektrodenlasche (T, T', T"), bevor die Elektrodenlasche (T, T', T") durch die Elektrodenlaschen-Andrückeinheit (200) angedrückt wird.

13. Verfahren zur Herstellung einer Sekundärbatterie, umfassend:
Vorbereiten mehrerer Einheitszellen, die Elektrodenlaschen (T, T', T") umfassen, auf denen eine Identifikationsmarkierung (I) aufgebracht ist;
Herstellen einer Elektrodenanordnung (10) durch Stapeln der mehreren Einheitszellen mit einem dazwischen angeordneten Separator oder durch Aufrollen der auf einer Separatorfolie angeordneten mehreren Einheitszellen zusammen mit der Separatorfolie; und
Erkennen der Identifikationsmarkierung (I) mittels des Verfahrens nach Anspruch 11 oder 12.

## Revendications

1. Dispositif de reconnaissance de repère d'identification (1000, 2000), comprenant :
un lecteur de repère d'identification (100) prévu pour identifier un repère d'identification (I) sur une languette d'électrode (T, T', T") d'une cellule unitaire ou d'un ensemble d'électrode (10) ;
une unité de pression de languette d'électrode (200) prévue pour comprimer la languette d'électrode (T, T', T") de manière à entraîner l'alignement d'une surface de la languette d'électrode (T, T', T") sur laquelle le repère d'identification (I) est marqué par rapport au lecteur de repère d'identification (100) ; et
un contrôleur (300, 300') prévu pour commander l'unité de pression de languette d'électrode (200) et le lecteur de repère d'identification (100) afin de permettre au lecteur de repère d'identification (100) d'identifier le repère d'identification (I) après compression de la languette d'électrode (T, T', T") par l'unité de pression de languette d'électrode (200),
où l'unité de pression de languette d'électrode (200) est agencée de manière à être inclinée suivant un angle prédéterminé par rapport à la cellule unitaire ou à l'ensemble d'électrode (10),
où l'unité de pression de languette d'électrode (200) comprend un cadre de corps principal (210) avec un trou traversant (211), et
où le lecteur de repère d'identification (100) est disposé obliquement sur la cellule unitaire ou l'ensemble d'électrode (10) pour être sur le même axe que le trou traversant (211).

2. Dispositif de reconnaissance de repère d'identification (1000, 2000) selon la revendication 1, où le lecteur de repère d'identification (100) est disposé sur la cellule unitaire ou l'ensemble d'électrode (10) suivant un angle identique à l'angle de disposition de l'unité de pression de languette d'électrode (200),
l'unité de pression de languette d'électrode (200) est raccordée au lecteur de repère d'identification (100) et prévue de manière à être déplaçable depuis le lecteur de repère d'identification (100), et
l'unité de pression de languette d'électrode (200) est prévue pour comprimer la surface de la languette d'électrode (T, T', T") sur laquelle le repère d'identification (I) est marqué, lorsque l'unité de pression de languette d'électrode (200) est déplacée vers la languette d'électrode (T, T', T") depuis le lecteur de repère d'identification (100).

3. Dispositif de reconnaissance de repère d'identification selon la revendication 1 ou la revendication 2, où une extrémité de l'unité de pression de languette d'électrode (200) dans la direction de compression par l'unité de pression de languette d'électrode (200) est pourvue d'une pluralité de nervures de pression (230, 330) prévues pour comprimer la languette d'électrode (T, T', T").

4. Dispositif de reconnaissance de repère d'identification (1000, 2000) selon la revendication 3, où les surfaces extérieures de la pluralité de nervures de pression (230, 330) sont revêtues d'éthylène-propylène fluoré (FEP) ou de polytétrafluoroéthylène (PTFE).

5. Dispositif de reconnaissance de repère d'identification (1000, 2000) selon la revendication 3 ou la revendication 4, où la pluralité de nervures de pression (230, 330) est agencée en parallélisme à une direction d'extension de la languette d'électrode (T, T', T") depuis une partie de corps (11) de la cellule unitaire ou une partie de corps (11) de l'ensemble d'électrode (10).

6. Dispositif de reconnaissance de repère d'identification (1000, 2000) selon l'une des revendications 3 à 5, où la pluralité de nervures de pression (230, 330) est prévue pour comprimer des surfaces de la languette d'électrode (T, T', T") espacées d'une distance prédéterminée de part et d'autre du repère d'identification (I).

7. Dispositif de reconnaissance de repère d'identification selon l'une des revendications 3 à 6, où l'unité de pression de languette d'électrode (200) comprend une pluralité de supports de nervure (220) installés sur le cadre de corps principal (210) et faisant saillie du cadre de corps principal (210) dans la direction de compression par l'unité de pression de languette d'électrode (200),
où la pluralité de supports de nervure (220) sont agencées en opposition les uns aux autres, le trou traversant (211) leur étant intercalé, et
les deux extrémités de la pluralité de nervures de pression (230, 330) sont fixées sur la pluralité de supports de nervure (220) opposés.

8. Dispositif de reconnaissance de repère d'identification (1000, 2000) selon la revendication 7, où la pluralité de nervures de pression (230, 330) sont raccordées à la pluralité de supports de nervure (220) de manière à couvrir les extrémités de la pluralité de supports de nervure (220) en opposition les uns aux autres, et
les extrémités de chaque support de la pluralité de supports de nervure (220) en opposition les uns aux autres sont pourvues d'une surface chanfreinée (222) inclinée vers l'autre support de nervure (220).

9. Dispositif de reconnaissance de repère d'identification (1000, 2000) selon l'une des revendications 1 à 8, comprenant en outre un élément d'éclairage (500) entre le lecteur de repère d'identification (100) et la languette d'électrode (T, T', T"),
où ledit élément d'éclairage (500) et situé sur le même axe que le lecteur de repère d'identification (100).

10. Dispositif de reconnaissance de repère d'identification (2000) selon l'une des revendications 1 à 7, comprenant en outre un injecteur d'air (600) prévu pour injecter de l'air vers la languette d'électrode (T, T', T") avant compression de la languette d'électrode (T, T', T") par l'unité de pression de languette d'électrode (200).

11. Procédé de reconnaissance de repère d'identification, au moyen du dispositif de reconnaissance de repère d'identification (1000, 2000) selon l'une des revendications précédentes, comprenant :
la mise en place d'une cellule unitaire ou d'un ensemble d'électrode (10), comprenant une languette d'électrode (T, T', T") sur laquelle est marqué un repère d'identification (I), sous le lecteur de repère d'identification (100) ;
le déplacement de l'unité de pression de languette d'électrode (200) vers la languette d'électrode (T, T', T") pour comprimer la languette d'électrode (T, T', T"), entraînant l'alignement de la languette d'électrode (T, T', T") par rapport au lecteur de repère d'identification (100), et
l'identification du repère d'identification (I) sur la languette d'électrode (T, T', T") par le lecteur de repère d'identification (100) dans un état où la languette d'électrode (T, T', T") est perpendiculaire au lecteur de repère d'identification (100).

12. Procédé de reconnaissance de repère d'identification selon la revendication 11, comprenant en outre une injection d'air vers la languette d'électrode (T, T', T") avant compression de la languette d'électrode (T, T', T") par l'unité de pression de languette d'électrode (200).

13. Procédé de fabrication d'une batterie secondaire, comprenant :
la préparation d'une pluralité de cellules unitaires comprenant des languettes d'électrodes (T, T', T") sur lesquelles est marqué un repère d'identification (I) ;
la fabrication d'un ensemble d'électrode (10) par empilement de la pluralité de cellules unitaires avec un séparateur intercalé, ou par enroulement de la pluralité de cellules unitaires mises en place sur une feuille de séparation avec la feuille de séparation ; et
la reconnaissance du repère d'identification (I) au moyen du procédé selon la revendication 11 ou la revendication 12.
